# EUROPÄISCHE PATENTSCHRIFT

(11) **EP 4 070 890 B1**
(45) Veröffentlichungstag und Bekanntmachung des Hinweises auf die Patenterteilung: **10.09.2025**
(21) Anmeldenummer: 21167686.1
(22) Anmeldetag: 09.04.2021
(51) Int. Cl.: B05C 1/02, B05C 5/02, B05C 11/04

(54) **VERFAHREN ZUM AUFTRAGEN EINES MATERIALS AUF EINE OBERFLÄCHE EINES WINDENERGIEANLAGEN-ROTORBLATTES UND MATERIAL-APPLIKATOR**
METHOD OF APPLYING A MATERIAL TO A SURFACE OF A WIND ENERGY ROTOR BLADE AND MATERIAL APPLICATOR
PROCÉDÉ D'APPLICATION D'UNE MATIÈRE À UNE SURFACE D'UNE PALE DE ROTOR D'ÉOLIENNE ET APPLICATEUR DE MATIÈRE

(43) Veröffentlichungstag der Anmeldung: 12.10.2022
(73) Patentinhaber: Wobben Properties GmbH, 26607 Aurich (DE)
(72) Erfinder: Bärtl, Christina, 26603 Aurich (DE); Voigt, Karsten, 39291 Lostau (DE)
(74) Vertreter: Eisenführ Speiser

(56) Entgegenhaltungen:
- EP-A1- 3 211 216
- EP-A1- 3 858 588
- WO-A1-2021/115539
- WO-A1-97/18043
- US-A1- 2007 127 978
- US-B1- 6 276 858

## Beschreibung

Die vorliegende Erfindung betrifft ein Verfahren zum Auftragen eines Materials auf eine Oberfläche eines Windenergieanlagen-Rotorblattes sowie eine Verwendung eines Material-Applikators. Bei der Herstellung von Rotorblättern einer Windenergieanlage kann es notwendig sein, Material wie beispielsweise einen Erosionsschutz auf einer Oberfläche des Rotorblattes aufzubringen. Hierbei ist es notwendig, für eine gleichbleibende Materialdicke zu sorgen. WO 2021/115539 A1 zeigt ein Verfahren zur Herstellung von Kantenschutzbeschichtungen bei Rotorblättern einer Windenergieanlage. Hierzu ist ein Applikator mit einer flexiblen Grundplatte mit einer an einer Seite angebrachten Zahnung sowie einem Zuführkanal vorgesehen.

EP 3 858 588 A1 zeigt einen Material-Applikator sowie ein Verfahren zum Auftragen eines Beschichtungsmaterials auf eine Oberfläche eines Rotorblatts einer Windenergieanlage.

Der Applikator weist eine Basiseinheit und eine Mehrzahl von Zähnen auf. US 6 276 858 B1 zeigt einen Material-Applikator mit einer Grundplatte mit Zähnen.

Es ist daher eine Aufgabe der vorliegenden Erfindung, ein Verfahren zum Auftragen eines Materials auf eine Oberfläche eines Windenergieanlagen-Rotorblattes vorzusehen, welches eine Applikation von Material auf der Oberfläche des Rotorblattes erlaubt.

Diese Aufgabe wird durch ein Verfahren zum Auftragen eines Materials auf eine Oberfläche eines Windenergieanlagen-Rotorblattes nach Anspruch 1 sowie durch eine Verwendung eines Material-Applikators gemäß Anspruch 3 gelöst.

Somit wird ein Verfahren zum Auftragen eines Materials auf eine Oberfläche eines Windenergieanlagen-Rotorblattes vorgesehen. Nachdem eine Rotorblattschale hergestellt worden ist, wird ein Material zumindest teilweise auf einer Oberfläche des Rotorblattes mittels eines Material-Applikators aufgetragen. Der Material-Applikator weist eine Basiseinheit mit einem Randbereich auf, der keine Zähne oder Zähne mit reduzierten Höhen aufweist, so dass die Dicke des aufgetragenen Beschichtungsmaterials im Randbereich reduziert ist

Die Basiseinheit weist eine Zufuhreinheit zum Zuführen des aufzutragenden Beschichtungsmaterials auf. Die Basiseinheit ist im mittleren Bereich flexibler, in dem ein Abstand zwischen den Zähnen größer ist, so dass die Basiseinheit an eine Krümmung angepasst werden kann, so dass die Zähne auf einer Oberfläche des Rotorblattes platziert werden. Der Applikator weist eine Mehrzahl von Zähnen aufweisen, welche an oder mit einer Basis verbunden sind. Die Höhe oder Länge der Zähne definiert dann eine Dicke des applizierten Materials. Durch den Material-Applikator kann ein Material mit einer definierten Materialschichtstärke aufgetragen werden.

Die Höhe der Zähne kann von innen nach außen zum Randbereich hin abnehmen. Somit können insbesondere im Außenbereich des Material-Applikators Zähne vorhanden sein, welche eine geringere Höhe haben als Zähne in der Mitte des Material-Applikators. Dies ist insbesondere vorteilhaft, weil damit vermieden wird, dass eine Kante zwischen dem aufgetragenen Material und der Oberfläche des Rotorblattes vorhanden ist.

Der Material-Applikator weist eine Basiseinheit beispielsweise in Form einer (flexiblen) Platte und eine Mehrzahl von Zähnen auf, welche mit der Platte verbunden sind, und eine Materialzufuhr aufweisen. Optional kann ein Randbereich der Basiseinheit ohne Zähne vorgesehen sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2 und 3: zeigen jeweils eine schematische Schnittansicht eines Materialappli- kators,
- Fig. 4: zeigt eine schematische Schnittansicht eines Rotorblattes und eines Material-Applikators, und
- Fig. 5: zeigt eine schematische Teilschnittansicht eines Rotorblattes und eines Material-Applikators.

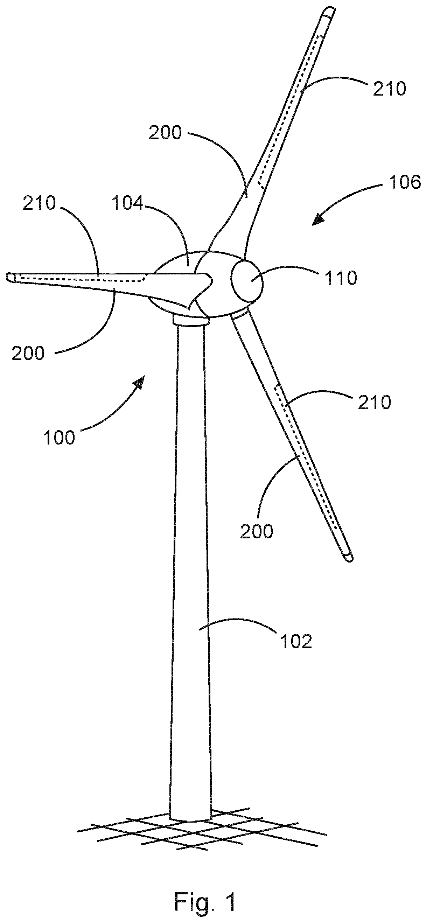

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Zum Erosionsschutz kann beispielsweise an den Vorderkanten 200a des Rotorblattes 200 ein Material 210 auf einer Oberfläche 201 aufgetragen sein. Der durch das Material 210 geschützte Bereich des Rotorblattes liegt vorzugsweise im Bereich der Rotorblattvorderkante, da dieser Bereich typischerweise am meisten beansprucht wird. Gemäß der Erfindung kann das Material 210 jedoch auch an anderen Stellen des Rotorblattes aufgetragen sein. Besonders vorteilhaft ist das Material 210 im Bereich des äußersten Drittels der Länge des Rotorblattes vorgesehen.

Das Material 210 kann beispielsweise mittels eines Material-Applikators 300 aufgetragen werden. Der Material-Applikator kann beispielsweise in Form eines Rakel-Applikators aufgetragen werden.

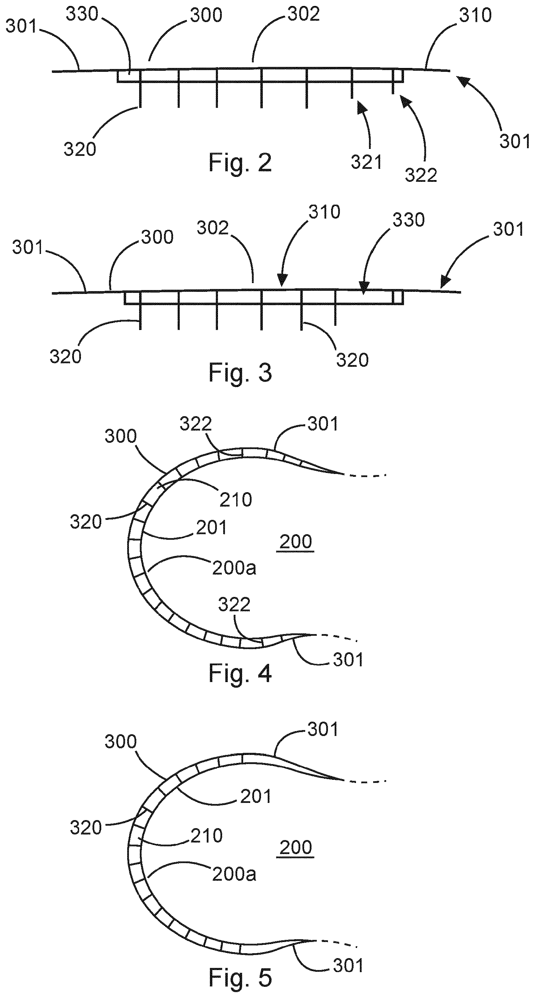

Fig. 2 zeigt eine schematische Schnittansicht eines Material-Applikators gemäß einem ersten Ausführungsbeispiel. Der Material-Applikator 300 weist eine Basiseinheit 310 mit einer Zufuhreinheit 330 zum Zuführen von Material, eine Mehrzahl von Zähnen oder Vorsprüngen 320, einen mittleren Bereich 302 und einen Randbereich 301 auf. Die Basiseinheit 310 weist in einem Randbereich 301 keine Zähne oder Vorsprünge 320 auf oder die Länge oder Höhe der Zähne oder Vorsprünge 320 reduziert sich zum Randbereich 301 hin. Damit werden Zähne oder Vorsprünge 321, 322 vorgesehen, welche kürzer sind als die Zähne 320 im mittleren Bereich der Basiseinheit. 310

Fig. 3 zeigt eine schematische Schnittansicht eines Material-Applikators gemäß einem zweiten Ausführungsbeispiel. Hierbei weist der Material-Applikator 300 eine Basiseinheit 310, eine Zufuhreinheit 330, eine Mehrzahl von Zähnen 320, einen mittleren Bereich 302 und einen Randbereich 301 auf. Gemäß einem Aspekt der vorliegenden Erfindung sind in dem Randbereich 301 keine Zähne oder Vorsprünge 320 vorgesehen. Im Vergleich zum ersten Ausführungsbeispiel ist der Randbereich 301 des Material-Applikators gemäß dem zweiten Ausführungsbeispiel breiter ausgestaltet. Insbesondere fehlen die Zähne oder Vorsprünge 321, 322 aus dem ersten Ausführungsbeispiel.

Der Material-Applikator 300 gemäß dem ersten oder zweiten Ausführungsbeispiel kann somit als ein Rakel-Applikator vorgesehen sein.

Durch die Zufuhreinheit 330 wird Material im Bereich der Zähne oder Vorsprünge 320 zugeführt. Bei der Applizierung des Materials 210 auf einer Oberfläche 201 eines Rotorblattes 200 wird der Material-Applikator 300 zum Auftragen des Materials beispielsweise entlang einer Längsachse des Rotorblattes 300 bewegt. Durch die Höhe der Zähne 320, 321, 322 wird die Dicke des aufgetragenen Materials bestimmt. Je kürzer die Zähne oder Vorsprünge 320, desto geringer die Dicke des aufgetragenen Materials.

In Fig. 4 ist ein Rotorblatt mit einem Material-Applikator gemäß Fig. 2 gezeigt. Der Material-Applikator 300 mit der Zufuhreinheit 330 der Mehrzahl der Zähne 320 sowie der Zähne 321, 322 mit reduzierter Höhe wird auf eine Oberfläche 201 des Rotorblattes, insbesondere im Bereich der Rotorblattvorderkante 200a, platziert. Das Material wird über die Zufuhreinheit 330 zugeführt und der Material-Applikator 300 wird entlang der Längsachse des Rotorblattes bewegt, so dass Material 210 auf der Oberfläche 201 des Rotorblattes 200 aufgetragen wird. Die Dicke des Materials hängt dabei von der Länge der Zähne 320, 321, 322 ab.

Gemäß dem ersten Ausführungsbeispiel weisen Zähne 321, 322 im Randbereich 301 des Material-Applikators 300 eine reduzierte Höhe auf, so dass dort auch Material mit einer reduzierten Dicke appliziert wird. Der Randbereich 301, an welchem keine Zähne vorgesehen sind, wird unmittelbar auf die Oberfläche 201 des Rotorblattes 200 aufgelegt, so dass an dieser Stelle kein Material 210 mittels des Material-Applikators 300 appliziert werden kann. Dies ist vorteilhaft, weil damit ein abrupter Übergang zwischen dem Material 210 und der restlichen Oberfläche 201 des Rotorblattes 200 vermieden werden kann. Insbesondere kann damit eine Kante vermieden werden, welche sich negativ auf die aerodynamischen Eigenschaften des Rotorblattes auswirken kann.

Gemäß dem ersten Ausführungsbeispiel kann bei der Materialapplizierung mittels des Material-Applikators gemäß dem ersten Ausführungsbeispiel ein Materialauftrag ohne harte Kante vermieden werden, welcher anschließend nachbearbeitet werden muss.

Gemäß dem ersten Ausführungsbeispiel können die Zähne 320 beispielsweise eine Höhe von bis zu 5 mm aufweisen. Alternativ dazu kann die Höhe der Zähne bis zu 2 cm aufweisen. Die Höhe der Zähne 320 bestimmt die Dicke des applizierten Materials. Die Zähne 321, 322 können eine reduzierte Höhe aufweisen. Im Randbereich 301 der Basiseinheit 310 sind keine Zähne vorhanden, so dass ein Materialauftrag im Randbereich 301 reduziert wird, so dass eine Materialkante des Materials 210 zu dem Randbereich hin dünner wird.

In Fig. 5 ist ein Rotorblatt mit einer Rotorblattoberfläche 201 sowie einem Material-Applikator 300 gemäß dem zweiten Ausführungsbeispiel gezeigt. Der Material-Applikator 300 gemäß dem zweiten Ausführungsbeispiel weist eine Zufuhreinheit 330, eine Mehrzahl von Zähnen 320 sowie eine Basiseinheit 310, einen Randbereich 301 ohne Zähne und einen mittleren Bereich 302 auf. Gemäß dem zweiten Ausführungsbeispiel sind im Randbereich 301 keine Zähne vorgesehen. Beim Einsatz des Material-Applikators liegen dann die Zähne 320 sowie der Randbereich 310 auf der Oberfläche 201 des Rotorblattes auf. Mittels der Zufuhreinheit 330 kann Material zugeführt und appliziert werden. Dadurch, dass im Randbereich keine Zähne vorhanden sind, reduziert sich der Abstand zwischen der Basiseinheit 310 und der Oberfläche 201 des Rotorblattes zum Randbereich hin. Der Randbereich 301 liegt dann unmittelbar auf einer Oberfläche 201 des Rotorblattes auf, so dass sich die Dicke des aufgetragenen Materials 201 zum Randbereich hin reduziert.

Gemäß einem weiteren Ausführungsbeispiel der Erfindung kann die Steifigkeit insbesondere der Basiseinheit 310 variiert werden. Beispielsweise kann die Steifigkeit der Basiseinheit 310 im zentralen Bereich 302 reduziert werden (beispielsweis indem die Basiseinheit 310 dünner ausgestaltet ist), so dass der Material-Applikator 300 besser an eine Kontur einer Rotorblattvorderkante angepasst werden kann.

Gemäß einem Aspekt der vorliegenden Erfindung kann eine Versteifung des Randbereichs 301 erfolgen, damit der Material-Applikator besser an eine Kontur des Rotorblattes angepasst werden kann.

Gemäß einem Aspekt der vorliegenden Erfindung kann die Basiseinheit vorgeformt sein, damit der Material-Applikator besser an die Kontur des Rotorblattes angepasst werden kann.

Gemäß einem weiteren Aspekt der vorliegenden Erfindung ist ein Abstand zwischen Zähnen 320 im mittleren Bereich 302 der Basiseinheit 310 größer, um die Flexibilität der Basiseinheit in diesem Bereich zu vergrößern.

Gemäß einem weiteren Ausführungsbeispiel der vorliegenden Erfindung ist der Material-Applikator auch zur Applikation von zähflüssigen Beschichtungsmaterialien geeignet.

Gemäß einem weiteren Aspekt der vorliegenden Erfindung kann ein Roboterarm mit dem Material-Applikator gekoppelt sein, um den Material-Applikator 300 zur Applikation von Material entlang der Oberfläche 201 des Rotorblattes 200 zu führen. Der Roboter bzw. eine Steuereinheit kann dann die Zufuhrgeschwindigkeit des Materials 210 zusammen mit der Bewegung des Roboterarms steuern.

Gemäß der Erfindung kann ein flüssiges Beschichtungsmaterial mit einer konstanten Materialstärke auf einer Oberfläche des Rotorblattes aufgetragen werden.

Die Ränder des aufgetragenen Materials weisen eine geringere Dicke auf, so dass ein Übergang zwischen dem aufgetragenen Material und der Oberfläche des Rotorblattes ohne Stufen entsteht.

Mit einem erfindungsgemäßen Rotorblatt mit dem aufgetragenen Material 210 kann der aerodynamische Wirkungsgrad des Rotorblattes verbessert werden, während ein Schutz des Rotorblattes gewährleistet werden kann.

## Patentansprüche

1. Verfahren zum Auftragen eines Beschichtungsmaterials auf eine Oberfläche eines Windenergieanlagen-Rotorblattes (200), mit den Schritten:
Platzieren eines Material-Applikators (300) auf einer Oberfläche (201) des Windenergieanlagen-Rotorblattes (200), wobei der Material-Applikator (300) eine Mehrzahl von Zähnen (320) aufweist,
wobei die Länge der Zähne (220) eine Dicke des aufgetragenen Beschichtungsmaterials bestimmt,
Zuführen des Beschichtungsmaterials (210) zu dem Material-Applikator (300),
Fahren des Material-Applikators (300) entlang einer Oberfläche (201) des Windenergieanlagen-Rotorblattes (200),
wobei der Material-Applikator (300) eine mit den Zähnen (320) gekoppelte Basiseinheit (310) mit einem Randbereich (301) aufweist, welcher keine Zähne oder Zähne (321, 322) mit einer reduzierten Höhe aufweist, so dass die Dicke des aufgetragenen Beschichtungsmaterials im Randbereich reduziert wird,
wobei die Basiseinheit (310) eine Zufuhreinheit (330) zum Zuführen des aufzutragenden Beschichtungsmaterials aufweist,
wobei die Basiseinheit (310) in einem mittleren Bereich (302) flexibler ausgestaltet ist, indem ein Abstand zwischen den Zähnen (320) im mittleren Bereich (302) größer ist, so dass die Basiseinheit (310) an eine Krümmung der Oberfläche (201) des Windenergieanlagen-Rotorblattes (200) angepasst werden kann, so dass die Zähne (320) auf einer Oberfläche (201) des Rotorblattes (200) platziert werden.

2. Verfahren nach Anspruch 1, wobei
die Zähne (320) eine Höhe von bis zu 5 mm aufweisen.

3. Verwendung eines Material-Applikators (300) zur Applikation von zähflüssigem Beschichtungsmaterial auf einer Oberfläche (201) eines Windenergieanlagen-Rotorblattes (300), wobei der Material-Applikator (300) aufweist:
eine Basiseinheit (310) mit einem Randbereich (301),
eine Mehrzahl von Zähnen (320), welche mit der Basiseinheit (310) gekoppelt sind und insbesondere eine Höhe von bis zu 5 mm aufweisen,
eine Zufuhreinheit (330), welche dazu geeignet ist, Beschichtungsmaterial (210) zuzuführen,
wobei im Randbereich (301) keine Zähne oder Zähne (321, 322) mit einer reduzierten Länge vorhanden sind, so dass die Dicke des aufgetragenen Beschichtungsmaterials im Randbereich reduziert wird,
wobei die Basiseinheit (310) in einem mittleren Bereich (302) flexibler ausgestaltet ist, indem ein Abstand zwischen den Zähnen (320) im mittleren Bereich (302) größer ist, so dass die Basiseinheit (310) an eine Krümmung der Oberfläche (201) des Windenergieanlagen-Rotorblattes (200) angepasst werden kann, so dass die Zähne (320) auf einer Oberfläche (201) des Rotorblattes (200) platziert werden.

## Claims

1. A method of applying a coating material to a surface of a wind turbine rotor blade (200), comprising the steps of:
placing a material applicator (300) on a surface (201) of the wind turbine rotor blade (200), the material applicator (300) having a plurality of teeth (320),
wherein the length of the teeth (220) determines a thickness of the applied coating material,
feeding the coating material (210) to the material applicator (300),
moving the material applicator (300) along a surface (201) of the wind turbine rotor blade (200),
wherein the material applicator (300) has a base unit (310) coupled with teeth and having an edge region (301) which has no teeth or teeth (321, 322) with a reduced height, so that the thickness of the applied coating material in the edge region is reduced,
wherein the base unit (310) comprises a supply unit (330) for supplying the coating material to be applied,
wherein the base unit (310) is made more flexible in a center portion (302) by increasing a distance between the teeth (320) in the center portion (302), so that the base unit (310) can be adapted to a curvature of the surface (201) of the wind turbine rotor blade (200) so that the teeth (320) are placed on a surface (201) of the rotor blade (200).

2. The method according to claim 1, wherein
the teeth (320) have a height of up to 5 mm.

3. Use of a material applicator (300) for applying viscous coating material to a surface (201) of a wind turbine rotor blade (300), the material applicator (300) comprising:
a base unit (310) with an edge area (301),
a plurality of teeth (320), which are coupled to the base unit (310) and in particular have a height of up to 5 mm,
a feed unit (330) which is suitable for feeding coating material (210),
wherein no teeth or teeth (321, 322) with a reduced length are present in the edge region (301), so that the thickness of the applied coating material in the edge region is reduced,
wherein the base unit (310) is designed to be more flexible in a central region (302) in that a distance between the teeth (320) in the central region (302) is larger, so that the base unit (310) can be adapted to a curvature of the surface (201) of the wind turbine rotor blade (200), so that the teeth (320) are placed on a surface (201) of the rotor blade (200).

## Revendications

1. Procédé pour appliquer un matériau de revêtement sur une surface d'une pale de rotor d'éolienne (200), avec les étapes :
de placement d'un applicateur de matériau (300) sur une surface (201) de la pale de rotor d'éolienne (200), dans lequel l'applicateur de matériau (300) présente une pluralité de dents (320),
dans lequel la longueur des dents (220) détermine une épaisseur du matériau de revêtement appliqué,
d'amenée du matériau de revêtement (210) à l'applicateur de matériau (300),
de déplacement de l'applicateur de matériau (300) le long d'une surface (201) de la pale de rotor d'éolienne (200),
dans lequel l'applicateur de matériau (300) présente une unité de base (310) couplée aux dents (320) avec une zone de bord (301), laquelle ne présente pas de dents ou présente des dents (321, 322) avec une hauteur réduite, de sorte que l'épaisseur du matériau de revêtement appliqué est réduite dans la zone de bord,
dans lequel l'unité de base (310) présente une unité d'amenée (330) pour amener le matériau de revêtement à appliquer,
dans lequel l'unité de base (310) est conçue de manière plus flexible dans une zone centrale (302) en augmentant un écart entre les dents (320) dans la zone centrale (302), de sorte que l'unité de base (310) peut être adaptée à une courbure de la surface (201) de la pale d'éolienne (200), de sorte que les dents (320) sont placées sur une surface (201) de la pale de rotor (200).

2. Procédé selon la revendication 1, dans lequel
les dents (320) présentent une hauteur allant jusqu'à 5 mm.

3. Utilisation d'un applicateur de matériau (300) pour appliquer un matériau de revêtement visqueux sur une surface (201) d'une pale de rotor d'éolienne (300), dans laquelle l'applicateur de matériau (300) présente :
une unité de base (310) avec une zone de bord (301),
une pluralité de dents (320), lesquelles sont couplées à l'unité de base (310) et présentent notamment une hauteur allant jusqu'à 5 mm,
une unité d'amenée (330), laquelle est adaptée pour amener le matériau de revêtement (210),
dans laquelle aucune dent n'est présente dans la zone de bord ou des dents (321, 322) avec une longueur réduite sont présentes dans la zone de bord (301), de sorte que l'épaisseur du matériau de revêtement appliqué est réduite dans la zone de bord,
dans laquelle l'unité de base (310) est conçue de manière plus flexible dans une zone centrale (302) en augmentant un écart entre les dents (320) dans la zone centrale (302), de sorte que l'unité de base (310) peut être adaptée à une courbure de la surface (201) de la pale de rotor d'éolienne (200), de sorte que les dents (320) sont placées sur une surface (201) de la pale de rotor (200).
